Europäisches Patentamt

European Patent Office

Office européen des brevets

(19)

(11) Publication number : **0 372 949 B1**

# EUROPEAN PATENT SPECIFICATION

(12)

(45) Date of publication of patent specification :
07.10.92 Bulletin 92/41

(51) Int. Cl.$^5$ : **B01J 19/00**, G01N 33/48

(21) Application number : 89312749.8

(22) Date of filing : 07.12.89

(54) **Reaction vessel.**

(30) Priority : 09.12.88 JP 311317/88

(43) Date of publication of application :
13.06.90 Bulletin 90/24

(45) Publication of the grant of the patent :
07.10.92 Bulletin 92/41

(84) Designated Contracting States :
DE FR GB

(56) References cited :
EP-A- 0 144 437
EP-A- 0 240 770

(73) Proprietor : SEIKO INSTRUMENTS INC.
31-1, Kameido 6-chome Koto-ku
Tokyo 136 (JP)

(72) Inventor : Tsugita, Akira
Ishizuka Building 305 Izumi-cho 17-28
Kashiwa-shi Chiba (JP)
Inventor : Kamo, Masaharu
Chiba Heights 201 Yamazaki 2704-48
Noda-shi Chiba (JP)
Inventor : Uchida, Toyoaki
Seiko Instruments Inc. 31-1 Kameido 6-chome
Koto-ku Tokyo (JP)
Inventor : Nanno, Ikuo
Seiko Seihi K. K. 3-1, Yashiki 4-chome
Narashino-shi Chiba (JP)
Inventor : Nomoto, Yasuhiro
Seiko Instruments Inc. 31-1 Kameido 6-chome
Koto-ku Tokyo (JP)
Inventor : Takahashi, Seitaro
Seiko Instruments Inc. 31-1 Kameido 6-chome
Koto-ku Tokyo (JP)

(74) Representative : Miller, Joseph et al
J. MILLER & CO. 34 Bedford Row, Holborn
London WC1R 4JH (GB)

## Description

This invention relates to reaction vessels for carrying out reactions which, for example, sequentially produce thiazolinon amino acid derivatives for automated amino-terminal sequence analysis of protein or peptide samples.

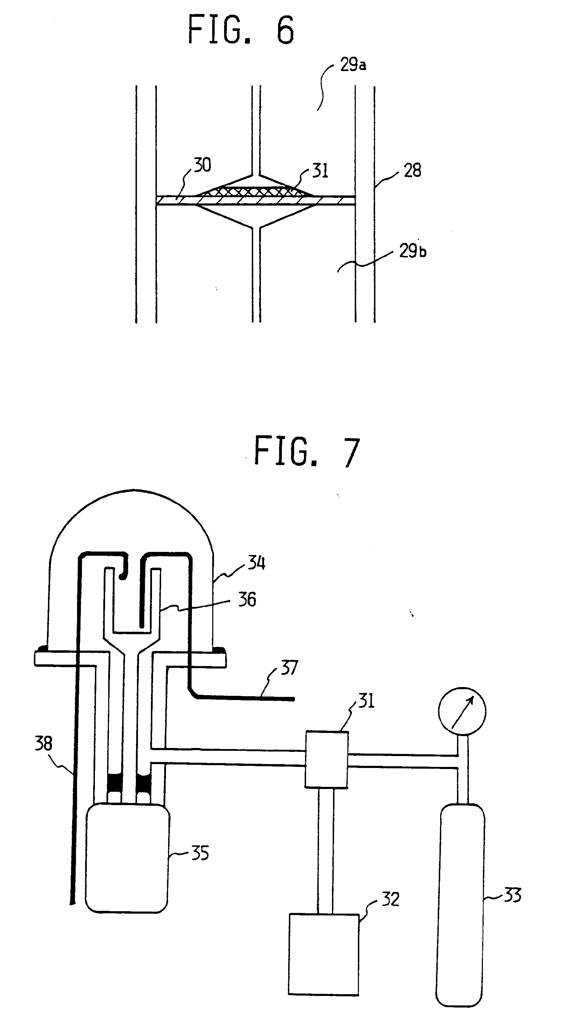

Figures 6 and 7 show two types of conventional reaction vessel for carrying out reactions which sequentially produce thiazolinon amino acid derivatives using the Edman reaction.

The reaction vessel shown in Figure 6 is such that a sample is adsorbed by a glass filter 31 on a membrane filter 30 sandwiched between a pair of glass blocks 29a, 29b located within a frame 28. Reagent or solvent is fed to the sample through a flow path in the centre of the glass blocks.

The reaction vessel shown in Figure 7 comprises a reaction chamber 34 connected to a vacuum pump 32 and to a nitrogen gas bottle 33 through a three way switch valve 31. Thus the reaction chamber 34 can be selectively evacuated or filled with nitrogen gas. The reaction chamber 34 consists of a glass cup 36 rotatable by a motor 35. A supply line 37 is provided for feeding reagent and solvent needed for the reaction into the glass cup 36. A discharge line 38 is provided for removing the reagent and solvent.

In the type of reaction vessel shown in Figure 6, the sample is supported between the fibres of the glass filter 30 and therefore the reagent or solvent cannot be efficiently distributed. Hence, the reaction becomes non-uniform so that repetitive yield in sequence analysis is reduced. Such a tendency becomes marked in the case where there is only a micro amount of sample to analyse. Further, different types of reagents and solvents are supplied through a common flow path to the sample and this may cause contamination.

In the type of reaction vessel shown in Figure 7 the motor for rotating the glass cup 36 is located outside the reaction chamber 34 but seals etc. have to be provided to ensure that the vacuum in the reaction chamber can be maintained. Thus maintenance of the reaction vessel is complicated. In addition, when the glass cup is relatively small for reacting micro amounts of sample, it is difficult to maintain stable rotation.

EP-A-0,144 437 discloses a rheometer including a sensing member of magnetic material, immersed in a sample material sealed in a sample container, magnetic means external to the sample container and operable to generate magnetic force to cause the sensing member to float or move in the sample material in the container, a non-contact optoelectronic tracker for sensing displacement of the sensing member, and control means for controlling the magnetic means in dependence upon the position sensed by the tracker to adjust the position of the sensing member.

According to the present invention there is provided a reaction vessel characterised by comprising a reaction chamber composed of non-magnetic material, a sample carrier disposed in the reaction chamber and comprised of a core of magnetic material, means providing a fluid path into the reaction chamber so that reagent can be charged into and discharged from the reaction chamber, magnetic means disposed outside the reaction chamber for generating magnetic force to cause the sample carrier to float in the reaction chamber; a supporting device for supporting the magnetic means; sensor means for detecting the position of the sample carrier, and control means for controlling the magnetic means in dependence upon the position sensed by the sensor means to adjust the position of the sample carrier.

Preferably, the core of the sample carrier has a surface coating composed of glass, ceramic material or polymeric material. The polymeric material may be vinylidene fluoride polymer.

The sample carrier may have a smooth spherical or ellipsoidal surface.

The control means may be adopted to prevent a sample on the sample carrier from contacting with an inner face of the reaction chamber.

In one embodiment, the reaction chamber has a plurality of bores for receiving therein a plurality of sample carriers.

The sample carrier may have a surface coating appropriate for carrying a sample of protein or peptide. In this case, the fluid path providing means may be appropriate for applying Edman reagent used in an Edman reaction to the protein or peptide sample to effect reaction between the Edman reagent and the protein or peptide sample to produce thiocarbamyl and thiazolinon derivatives so as to carry out amino acid sequence analysis from amino terminals of the protein or peptide sample.

The reaction vessel preferably includes motor means connected to the supporting device and operable to move the supporting device with respect to the reaction chamber.

The invention is illustrated, merely by way of example, in the accompanying drawings, in which:-

Figure 1 is a sectional view of one embodiment of a reaction vessel according to the present invention;

Figure 2 is a block diagram of control circuitry of electro-magnets and position sensors of the reaction vessel of Figure 1;

Figure 3 is a sectional view of a sample carrier of the reaction vessel of Figure 1;

Figure 4 shows the separation pattern of a standard mixture of phenylthiocarbamyl amino acid derivatives;

Figure 5 is a partial perspective view of another embodiment of a reaction vessel according to the present invention; and

Figures 6 and 7 are sectional views of conventional reaction vessels.

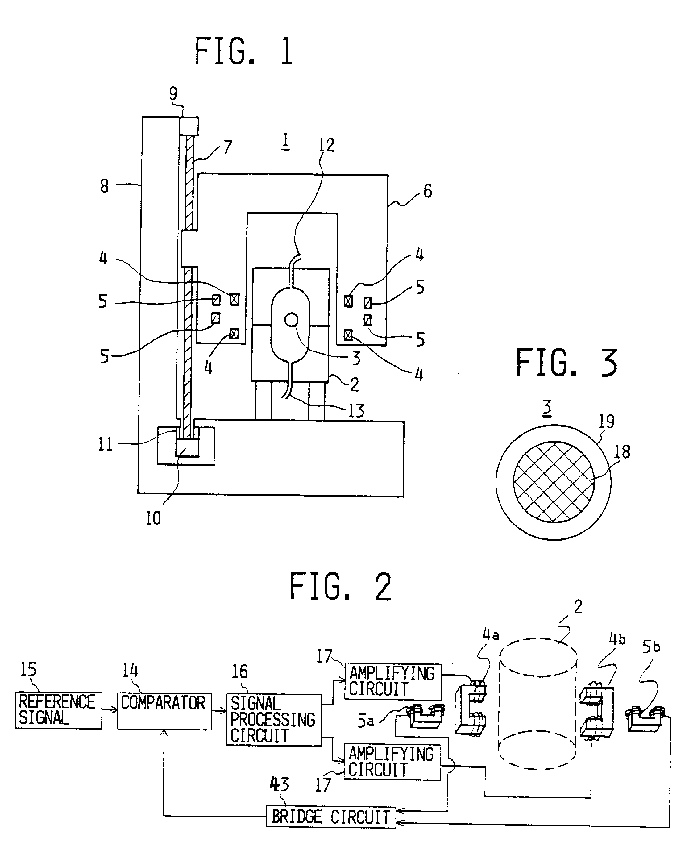

Referring first to Figure 1, there is illustrated one embodiment of a reaction vessel 1 according to the present invention. Within the reaction vessel 1 there is a reaction chamber 2 housing a sample carrier 3 which carries, for example, a protein sample. The sample carrier 3 is composed of magnetic material and floats inside the reaction chamber due to magnetic force generated by electro-magnets 4. The position of the sample carrier within the reaction chamber 2 is monitored by position sensors 5. Coils of the electro-magnets 4 are fixed to a carrier 6 or other support structure. The carrier 6 is engaged with a bowl screw 7 through a bowl (not shown). The bowl screw 7 is attached to a base frame 8 through a shaft retainer 9 and a motor retainer 11. A motor 10 connected to the bowl screw moves the carrier 6 in the vertical direction. The reaction chamber 2 is provided with an upper fluid path 12 and a lower fluid path 13 so that reagent and solvent needed for reactions can be charged to and discharged from the reaction chamber.

Figure 2 shows control circuitry for controlling the floating and position of the sample carrier 3 within the reaction chamber 2 by means of the electro-magnets 4 and the position sensors 5. Firstly, a position sensor 5a detects a distance $G_1$ between an electro-magnet 4a and the sample carrier 3 which floats due to the magnetic force generated by the electro-magnet 4a and an electro-magnet 4b. A sensor 5b detects a distance $G_2$ between the electro-magnet 4b and the sample carrier 3. A bridge circuit 43 processes detection signals representative of the detected distances $G_1$, $G_2$ and a comparator 14 compares a processed signal from the bridge circuit 43 with a reference signal from a reference signal source 15. A signal processing circuit 16 receives the output of the comparator and calculates appropriate values of electric currents for the electro-magnets 4a, 4b. Amplifying circuits 17 amplify the electric currents from the signal processing circuit 16 so as to control the magnitude of the magnetic forces generated by the electro-magnets 4a, 4b thereby to equalise the distances $G_1$, $G_2$.

As described above with reference to Figure 1, the electro-magnets 4 are fixed to the movable support 6, and the sample carrier 3 is held by the magnetic force of the electro-magnets 4a, 4b so that the sample carrier 3 can be displaced and positioned in response to corresponding displacement of the electro-magnets 4, i.e. the sample carrier 3 can be displaced vertically within the reaction chamber 2 as a result of corresponding movement of the support 6.

In Figure 1, the electro-magnets 4 and the position sensors 5 are aligned in the horizontal direction with respect to the reaction chamber 2 and the sample carrier 3, but they can be aligned in any linear direction e.g. the vertical direction.

Reagent and solvent can be efficiently applied to the sample on the sample carrier using the fluid paths 12, 13.

Next a method of sequentially producing thiazolinon amino acid derivatives from a protein sample carried on the sample carrier 3 and detecting the derivatives will be described.

As shown in Figure 3, the sample carrier 3 is comprised of a ferrite core 18 with a coating 19 formed thereon. The coating may be glass, ceramic material or polymeric material, e.g. a vinylidene fluoride polymer. The ferrite core 18 may be of spherical, cubic, cylindrical or other shape. Thus, for example, the sample carrier may have a smooth spherical or ellipsoidal surface.

The following procedure is based on the ordinary automated gas phase Edman method. The protein sample on the sample carrier 3 (of 5 mm diameter) is treated with polybrene (hexadimethrin) (bromide) and then is applied with 5 micro-litre of 70% formic acid containing 1 pico (pico : $10^{-12}$) mole of myoglobin, and thereafter the protein sample is dried. Subsequently, a coupling reagent, a buffer vapour, a washing solvent, a cleavage reagent and an extraction solvent are delivered to the reaction chamber 2 according to an analysis programme shown in Table 1 of the commercially available automated gas phase sequence analyser.

## TABLE 1

```
Cycle Length : 32 steps
Runtime      : 43 mins 32 secs
```

| Step | Function | Value | Elapsed Time |
|------|----------|-------|--------------|
| 1 | Prep R2 | 6 | 0 min 6 sec |
| 2 | Deliver R2 | 20 | 0 min 26 sec |
| 3 | Prep R1 | 6 | 0 min 32 sec |
| 4 | Deliver R1 | 2 | 0 min 34 sec |
| 5 | Argon Dry | 40 | 1 min 14 sec |
| 6 | Deliver R2 | 400 | 7 min 54 sec |
| 7 | Prep R1 | 6 | 8 min 0 sec |
| 8 | Deliver R1 | 2 | 8 min 2 sec |
| 9 | Argon Dry | 40 | 8 min 42 sec |
| 10 | Deliver R2 | 400 | 15 min 22 sec |
| 11 | Prep R1 | 6 | 15 min 28 sec |
| 12 | Deliver R1 | 2 | 15 min 30 sec |
| 13 | Argon Dry | 40 | 16 min 10 sec |
| 14 | Deliver R2 | 400 | 22 min 50 sec |
| 15 | Argon Dry | 120 | 24 min 50 sec |
| 16 | Deliver S1 | 60 | 25 min 50 sec |
| 17 | Deliver S2 | 200 | 29 min 10 sec |
| 18 | Argon Dry | 120 | 31 min 10 sec |
| 19 | Load R3 | 4 | 31 min 14 sec |
| 20 | Argon Dry | 4 | 31 min 18 sec |
| 21 | Pause | 300 | 36 min 18 sec |
| 22 | Load S2 | 6 | 36 min 24 sec |
| 23 | Block Flush | 6 | 36 min 30 sec |
| 24 | Argon Dry | 120 | 38 min 30 sec |
| 25 | Prep Transfer | 30 | 39 min 0 sec |
| 26 | Deliver S1 | 9 | 39 min 9 sec |
| 27 | Transfer w/S3 | 52 | 40 min 1 sec |
| 28 | Pause | 20 | 40 min 21 sec |
| 29 | Transfer w/Argon | 40 | 41 min 1 sec |
| 30 | End Transfer | 1 | 41 min 2 sec |
| 31 | Deliver S3 | 30 | 41 min 32 sec |
| 32 | Argon Dry | 120 | 43 min 32 sec |

(Extracted from 477 A type manual of Applied Biosystems Co., Ltd.)

```
R1 : 5% phenylisothiocyanate/heptane
R2 : 12.5% trimethylamine/water
R3 : trifluoroacetic acid
S1 : n-heptane
S2 : ethyl acetate
S3 : butyl chloride
```

Sequentially obtained thiazolinon amino acid derivatives are detected according to fluorescence analysis using 4-amino fluorescein. Namely, 75 micro-litres of methanol containing 1% of pyridine and 25 micro-litres of methanol containing 30 pico mole of 4-amino fluorescein are successively added to 150 micro-litres of butyl chloride containing thiazolinon amino acid derivatives, and the mixture is dried. Next, 25 micro-litres of methanol containing 30 pico mole of 4-amino fluorescein is added and the mixture is dried after being allowed to stand for 10 minutes. This dried sample is dissolved in 50 micro-litres of methanol. A 25 micro-litre portion of the solution is analysed using a liquid chromatograph and fluoro-photometric detector. The analysis conditions are shown in Table 2.

## TABLE 2

### ANALYSIS CONDITIONS FOR LIQUID CHROMATOGRAPH

Column:   Capcell Pack (AG) C18 produced by Shiseido Co. Ltd.    Ø 4.6 mm x 150 mm

Column temperature:   43°C

Detector:  spectrofluoro-photometer RF-540 produced by Shimazu Seisakusho Co. Ltd.

Excitation wavelength:  494 mm

Emission wavelength:   513 mm

Pump:  Waters 600E system

Flow rate:  total  0.8 m/min.

Gradient program:    (A)  10 mM sodium phosphate buffer
(B)  methanol
(C)  acetonitrile

| time(min) | (A)  % | (B)  % | (C)  % |
|---|---|---|---|
| 0.0 | 79 | 20 | 1 |
| 0.1 | 75 | 23 | 2 |
| 14.0 | 75 | 23 | 2 |
| 19.0 | 71 | 19 | 12 |
| 34.0 | 71 | 12 | 19 |
| 40.0 | 50 | 25 | 25 |
| 45.0 | 79 | 20 | 1 |
| 65.0 | 79 | 20 | 1 |

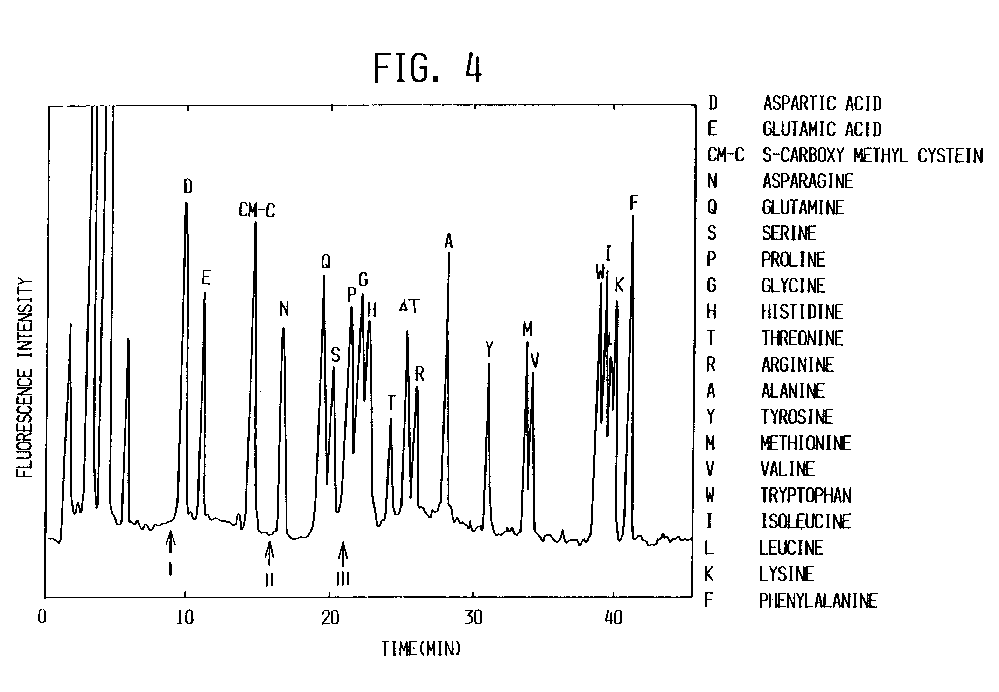

Figure 4 shows the separation pattern of a standard mixture of twenty kinds of phenylthiocarbamyl amino acid derivatives obtained by the above described procedure. The amount of the respective derivatives is of the order of 10 to 15 femto (femto : $10^{-15}$) mole. All the derivatives can be identified.

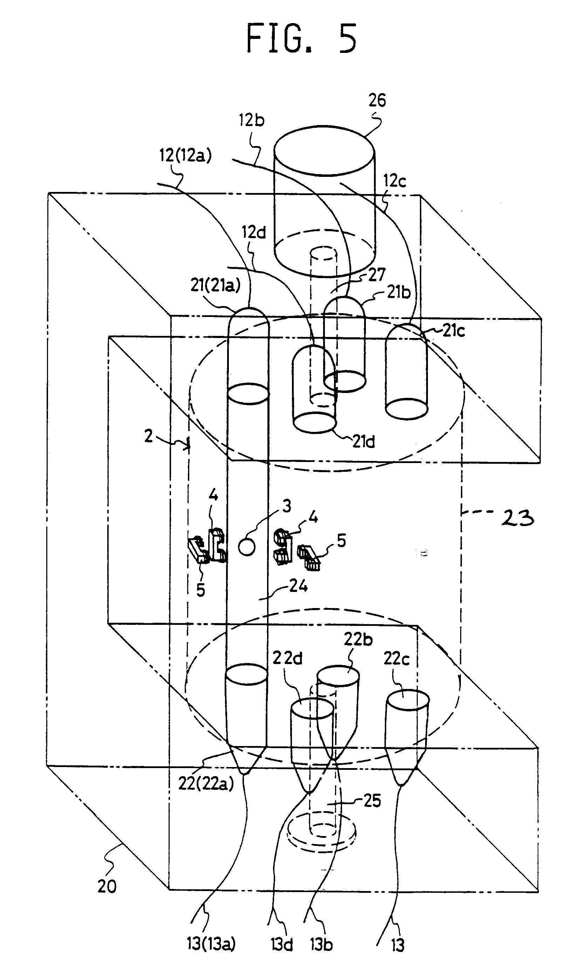

Referring now to Figure 5, there is illustrated a second embodiment of a reaction vessel according to the present invention. Like parts in Figures 1 and 5 have been designated by the same reference numerals. The reaction chamber 2 is composed of an upper section 21 and a lower section 22 formed in a frame 20 and a central section 24 passing through a rotary drum 23. The rotary drum 23 is supported by a support body 25 and is rotated via a rotary shaft 27 connected to a motor 26. The upper section 21 has four blind bores 21a, 21b, 21c, 21d and the lower section 22 has correspondingly four blind bores 22a, 22b, 22c, 22d. Each corresponding pair of upper and lower bores are vertically aligned with each other, and each pair can be selectively connected to one another by the central section 24 so as to constitute a closed space for the reaction chamber. The rotary drum 23 is provided with electro-magnets 4 and position sensors 5 in opposed relation to the central section 24 so as to float and position a sample carrier 3 in the closed central section. Reagents, solvents and inert gases such as argon can be supplied through upper fluid paths 12 (12a - 12d) and lower fluid paths 13 (13a - 13d) to the sample on the carrier 3 in the reaction chamber 2 so as, for example, to produce thiazolinon amino acid derivatives. Mutual contamination of these reagents and solvents can be avoided as far as possible. In this embodiment, four closed spaces or reaction chambers are provided but the number thereof can be one, two or more. The arrangement can be linear rather than circular as shown.

In the reaction vessels according to the present invention and described above, a sample carrier is floated and positioned in a reaction chamber so that reagents and solvents can be efficiently and uniformly applied to the sample so that contamination of the used reagents and solvents can be avoided as far as possible.

## Claims

1. A reaction vessel characterised by comprising a reaction chamber (2) composed of non-magnetic material, a sample carrier (3) disposed in the reaction chamber (2) and including a core (18) of magnetic material, means (12,13) providing a fluid path into the reaction chamber (2) so that reagent can be charged into and discharged from the reaction chamber, magnetic means (4) disposed outside the reaction chamber (2) for generating magnetic force to cause the sample carrier (3) to float in the reaction chamber, a supporting device (6) for supporting the magnetic means (4), sensor means (5) for detecting the position of the sample carrier (3) and control means (Figure 2) for controlling the magnetic means (4) in dependence upon the position sensed by the sensor means (5) to adjust the position of the sample carrier (3).

2. A vessel as claimed in claim 1, characterised in that the core (18) of the sample carrier (3) has a surface coating (19) composed of glass, ceramic material or polymeric material.

3. A vessel as claimed in claim 2, characterised in that the polymeric material is vinylidene fluoride polymer.

4. A vessel as claimed in any preceding claim, characterised in that the sample carrier (3) has a smooth spherical or elliposoidal surface.

5. A vessel as claimed in any preceding claim, characterised in that the control means (Figure 2) is adapted to present a sample on the sample carrier (3) from contacting with an inner face of the reaction chamber (2).

6. A vessel as claimed in any preceding claim, characterised in that the reaction chamber (2) has a plurality of bores (21a-21d, 22a-22d) for receiving therein a plurality of sample carriers (3).

7. A vessel as claimed in any preceding claim, characterised in that the sample carrier (3) has a surface coating (19) appropriate for carrying a sample protein or peptide.

8. A vessel as claimed in claim 7, characterised in that the fluid path providing means (12,13) is appropriate for applying Edman reagent used in an Edman reaction to the protein or peptide sample to effect reaction between the Edman reagent and the protein or peptide sample to produce thiocarbamyl and thiazolinon derivatives, so as to carry out amino acid sequence analysis from amino terminals of the protein or peptide sample.

9. A vessel as claimed in any preceding claim, characterised by motor means (10) connected to the supporting device (6) and operable to move the supporting device (6) with respect to the reaction chamber (2).

10. A vessel as claimed in claim 9, characterised in that the motor means (10) is connected to rotate a vertically mounted screw member (7) engaged on the supporting device (6).

## Patentansprüche

1. Reaktionsgefäß, dadurch gekennzeichnet, daß es umfaßt:
   eine aus nichtmagnetischem Material bestehende Reaktionskammer (2),
   einen in der Reaktionskammer angeordneten Probenträger (3), der einen Kern (18) aus magnetischem Material umfaßt,
   eine Einrichtung (12,13), die einen Fluidweg in der Reaktionskammer (2) vorsieht, derart daß Reagens in die Reaktionskammer einfüllbar und aus dieser auslaßbar ist,
   außerhalb der Reaktionskammer (2) angeordnete magnetische Mittel (4) zum Erzeugen einer Magnetkraft, um den Probenträger (3) zu veranlassen, in der Reaktionskammer zu schweben,
   eine Trageeinrichtung (6) zum Tragen der magnetischen Mittel (4),
   Sensormittel (5) zum Erfassen der Position des Probenträgers (3) und
   eine Steuereinrichtung (Fig. 2) zum Steuern der magnetischen Mittel (4) in Abhängigkeit von der durch die Sensormittel (5) erfaßten Position, um die Position des Probenträgers (3) einzustellen.

2. Gefäß nach Anspruch 1, dadurch gekennzeichnet, daß der Kern (18) des Probenträgers (3) eine aus Glas, keramischem Material oder polymerem Material bestehende Oberflächenbeschichtung aufweist.

3. Gefäß nach Anspruch 2, dadurch gekennzeichnet, daß das polymere Material ein Vinylidenfluoridpolymer ist.

4. Gefäß nach einem oder mehreren der vorhergehenden Ansprüche, dadurch gekennzeichnet, daß der Probenträger (3) eine glatte, sphärische oder ellipsoidische Oberfläche aufweist.

5. Gefäß nach einem oder mehreren der vorhergehenden Ansprüche, dadurch gekennzeichnet, daß die Steuereinrichtung (Fig. 2) dazu geeignet ist, das Berühren einer Probe auf dem Probenträger (3) mit einer inneren Fläche der Reaktionskammer (2) zu verhindern.

6. Gefäß nach einem oder mehreren der vorhergehenden Ansprüche, dadurch gekennzeichnet, daß die Reaktionskammer (2) eine Mehrzahl von Bohrungen (21a-21d, 22a-22d) aufweist, um darin eine Mehrzahl von Probenträgern (3) aufzunehmen.

7. Gefäß nach einem oder mehreren der vorhergehenden Ansprüche, dadurch gekennzeichnet, daß der Probenträger (3) eine Oberflächenbeschichtung (19) aufweist, die zum Tragen eines Proben-Proteins oder -Peptids geeignet ist.

8. Gefäß nach Anspruch 7, dadurch gekennzeichnet, daß die Fluidweg-Einrichtung (12,13) geeignet ist, Edman-Reagens, welches in einer Edman-Reaktion benutzt wird, auf die Protein- oder Peptidprobe anzuwenden, um eine Reaktion zwischen dem Edman-Reagens und der Protein- oder Peptidprobe zu bewirken, um Thiocarbamyl- und Thiazolinon-Derivate zu erzeugen, um eine Aminosäuresequenzanalyse von Aminoterminalen der Protein- oder Peptidprobe auszuführen.

9. Gefäß nach einem oder mehreren der vorhergehenden Ansprüche, gekennzeichnet durch eine Motoreinrichtung (10), die mit der Trageeinrichtung (6) verbunden und betriebsfähig ist, die Trageeinrichtung (6) relativ zur Reaktionskammer zu bewegen.

10. Gefäß nach Anspruch 9, dadurch gekennzeichnet, daß die Motoreinrichtung (10) verbunden ist, um ein vertikal angebrachtes, mit der Trageeinrichtung (6) in Eingriff stehendes Schraubenelement (7) zu drehen.


## Revendications

1. Une enceinte de réaction caractérisée en ce qu'elle comprend une chambre de réaction (2) constituée par un matériau non magnétique, un porte-échantillon (3) placé dans la chambre de réaction (2) et comprenant un noyau (18) en un matériau magnétique, des moyens (12, 13) qui établissent un chemin pour un fluide entrant dans la chambre de réaction (2), de façon qu'un réactif puisse être introduit dans la chambre de réaction et évacué de cette dernière, des moyens magnétiques (4) placés à l'extérieur de la chambre de réaction (2) pour générer une force magnétique capable de faire flotter le porte-échantillon (3) dans la chambre de réaction, un dispositif de support (6) destiné à supporter les moyens magnétiques (4), des moyens de détection (5) destinés à détecter la position du porte-échantillon (3) et des moyens de commande (figure 2) qui sont destinés à commander les moyens magnétiques (4) sous la dépendance de la position qui est détectée par les moyens de détection (5), pour régler la position du porte-échantillon (3).

2. Une enceinte selon la revendication 1, caractérisée en ce que le noyau (18) du porte-échantillon (3) comporte un revêtement de surface (19) consistant en un matériau du type verre, céramique ou polymère.

3. Une enceinte selon la revendication 2, caractérisée en ce que le matériau de type polymère consiste en fluorure de vinylidène.

4. Une enceinte selon l'une quelconque des revendications précédentes, caractérisée en ce que le porte-échantillon (3) a une surface sphérique ou ellipsoïdale lisse.

5. Une enceinte selon l'une quelconque des revendications précédentes, caractérisée en ce que les moyens de commande (figure 2) sont conçus pour éviter qu'un échantillon présent sur le support d'échantillon (3) ne vienne en contact avec une surface intérieure de la chambre de réaction (2).

6. Une enceinte selon l'une quelconque des revendications précédentes, caractérisée en ce que la chambre de réaction (2) comporte un ensemble de trous (21a-21d, 22a-22d) qui sont destinés à recevoir un ensemble de porte-échantillons (3).

7. Une enceinte selon l'une quelconque des revendications précédentes, caractérisée en ce que le porte-échantillon (3) comporte un revêtement de surface (19) approprié pour porter un échantillon consistant en une protéine ou un peptide.

8. Une enceinte selon la revendication 7, caractérisée en ce que les moyens (12, 13) qui établissent un chemin pour un fluide conviennent pour l'introduction d'un réactif d'Edman qui est utilisé dans une réaction d'Edman avec l'échantillon de protéine ou de peptide, pour produire une réaction entre le réactif d'Edman et l'échantillon de protéide ou de peptide, de façon à produire des dérivés du type thiocarbamyle et thiazolinone, afin d'acomplir une analyse de séquence d'acides aminés à partir de terminaisons de l'échantillon de protéine ou de peptide qui consistent en acides aminés.

9. Une enceinte selon l'une quelconque des revendications précédentes, caractérisée par des moyens à moteur (10) accouplés au dispositif de support (6) et que l'on peut faire fonctionner pour déplacer le dispositif de support (6) par rapport à la chambre de réaction (2).

10. Une enceinte selon la revendication 9, caractérisée en ce que les moyens à moteurs (10) sont accouplés de façon à faire tourner une vis montée verticalement (7) qui est accouplée au dispositif de support (6).

# FIG. 1

# FIG. 3

# FIG. 2

# FIG. 4

| | |
|---|---|
| D | ASPARTIC ACID |
| E | GLUTAMIC ACID |
| CM-C | S-CARBOXY METHYL CYSTEIN |
| N | ASPARAGINE |
| Q | GLUTAMINE |
| S | SERINE |
| P | PROLINE |
| G | GLYCINE |
| H | HISTIDINE |
| T | THREONINE |
| R | ARGININE |
| A | ALANINE |
| Y | TYROSINE |
| M | METHIONINE |
| V | VALINE |
| W | TRYPTOPHAN |
| I | ISOLEUCINE |
| L | LEUCINE |
| K | LYSINE |
| F | PHENYLALANINE |

EP 0 372 949 B1

# FIG. 5

# FIG. 6

# FIG. 7